# EUROPÄISCHE PATENTANMELDUNG

(11) **EP 1 923 548 A2**
(43) Veröffentlichungstag der Anmeldung: **21.05.2008**
(21) Anmeldenummer: 07020890.5
(22) Anmeldetag: 25.10.2007
(51) Int. Cl.: F01P 3/20, F02B 39/00

(54) **Verbrennungsmotor mit Turboladernachlaufkühlung**

(30) Priorität: 14.11.2006 DE 102006053514
(71) Anmelder: GM Global Technology Operations, Inc., Detroit, MI 48265-3000 (US)
(72) Erfinder: Wissdorf, Peter, 55469 Horn (DE)
(74) Vertreter: Daniel, Ulrich W.P.

(57) **Zusammenfassung**

Die Erfindung betrifft einen Verbrennungsmotor, umfassend
a) eine Zylinderbank (2,3) sowie ein Kühler (10), als Bestandteile eines von einer Pumpe (4) angetriebenen Kühlkreislaufs,
b) einen an den Kühlkreislauf angeschlossenen Turbolader (22), dessen Ablauf (23) mit einem Ausgleichsbehälter (24) verbunden ist,
c) eine Zusatzpumpe (7), deren Ansaugstutzen (16) mit dem Kühlerausgang (17) und deren Förderstutzen (18) kühlmittelzuführend mit dem Turbolader verbunden ist.

Weiterhin betrifft die Erfindung ein Kraftfahrzeug, beispielsweise einen Pkw, mit diesem Verbrennungsmotor.

## Beschreibung

Die Erfindung betrifft einen Verbrennungsmotor, mit einem Turbolader sowie ein Kraftfahrzeug, z. B. ein Personenkraftfahrzeug, mit diesem Motor. Hierbei soll nachfolgend unter einem Motor stets ein Verbrennungsmotor verstanden werden.

Der Turbolader eines Motors, z. B. eines Ottomotors, ist eine stark wärmebeanspruchte Komponente, die bei laufendem Motor über den Kühlkreislauf zum Kühlen des Motors mitgekühlt wird. Wird der Motor abgestellt, so stoppt die den Kühlkreislauf antreibende Pumpe, oftmals auch Wasserpumpe genannt und erfolgt in dieser Nachhitzephase noch eine gewisse Konvektionskühlung des Turboladers. Die Konvektionskühlung resultiert dabei aus Temperaturunterschieden im Kühlkreislauf, die durch ein nachlaufendes, dem Kühler zugeordnetes Gebläse verstärkt werden können. Trotz der Konvektionskühlung kommt es während der Nachhitzephase manchmal wegen einer zu großen, vom Turbolader an den Kühlmittelkreislauf abgegebenen Wärmemenge zu einem Druckanstieg im Kühlmittelausgleichsbehälter. Der Druckanstieg kann hierbei so groß sein, dass selbst im Anschluss an moderate Betriebspunkte, z. B. einer Fahrt mit 160 km/h auf ebener Strecke bei einer Außentemperatur von 25 °C, der Druck im (Kühlmittel-) Ausgleichsbehälter zu groß ist. Dies hat zur Folge, dass der Öffnungsdruck seines Renkdeckels erreicht wird und ein Kühlmittelverlust eintritt.

Es ist eine Aufgabe einer Ausführungsform der Erfindung, ein Erreichen des Öffnungsdrucks des Renkdeckels in der Nachhitzephase zu vermeiden.

Eine weitere Aufgabe besteht es, bei ausgeschaltetem Motor eine zuverlässige Kühlung des Turboladers zu gewährleisten.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft einen Verbrennungsmotor eines Kraftfahrzeugs, beispielsweise eines Pkws. Der Verbrennungsmotor umfasst eine Zylinderbank sowie einen Kühler als Bestandteile eines von einer Pumpe angetriebenen Kühlkreislaufs. Weiterhin besitzt er einen an den Kühlkreislauf angeschlossenen Turbolader. Der Ablauf des Turboladers ist mit einem (Kühlmittel-) Ausgleichsbehälter verbunden. Weiterhin verfügt der Verbrennungsmotor über eine Zusatzpumpe, deren Ansaugstutzen mit dem Kühlerausgang und deren Förderstutzen kühlmittelzuführend mit dem Turbolader verbunden ist.

Bei laufendem Motor kühlt der Kühlkreislauf in ausreichendem Maße die mindestens eine Zylinderbank und den Turbolader. Im Kühlkreislauf sind der Kühler und die Zylinderbank in Reihe geschaltet, sodass der Kühlerausgang mit dem Zylinderbankvorlauf und der Zylinderbankrücklauf mit dem Kühlereingang verbunden sind. Verbunden bedeutet hier, wie auch in der nachfolgenden Beschreibung, stets kühlflüssigkeitszuführend verbunden, was in der Regel über entsprechende Schlauchverbindungen realisiert wird. Die Kühlflüssigkeit wird bei laufendem Motor von der Pumpe, die oftmals Wasserpumpe genannt wird und ebenfalls zum oben genannten Kühlkreislauf gehört, umgewälzt. Die Kühlflüssigkeit strömt von der Pumpe zu der mindestens einen Zylinderbank, die aus Motorblock und Zylinderblock besteht. Von dort aus strömt sie entweder über den Kühler oder parallel hierzu über eine Heizung zum Thermostat und von dort zurück zur Pumpe.

Bei modernen Hochleistungsmotoren können zusätzliche Kühler vom Kühlmittel gekühlt werden, beispielsweise ein Motorölkühler, ein Getriebeölkühler, ein EGR-Kühler etc. Diese sollen nachfolgend zum Zwecke der einfacheren Darstellung außer Acht gelassen werden.

Der Verbrennungsmotor verfügt ferner über ein vor einem Eingang (Einlass oder Auslass) der Pumpe angeordnetem Thermostat. An das Thermostat ist auch eine Bypass-Leitung angeschlossen, die mit einer die Zylinderblöcke überbrückenden Überbrückung (englisch: x-over) verbunden ist. Bei höheren Kühlmitteltemperaturen von beispielsweise mehr als 82 °C sperrt das Thermostat die Bypass-Leitung. Bei niedrigeren Temperaturen gibt das Thermostat die Bypass-Leitung frei.

Dem Motor ist ein Turbolader zugeordnet, der ebenfalls an den Kühlkreislauf angeschlossen und dessen Ablauf mit einem (Kühlmittel-)Ausgleichsbehälter verbunden ist.

Beim Ausschalten des Motors stoppt die mechanisch angetriebene (Wasser-)Pumpe des Kühlkreislaufs. Der Kühlung des Turboladers bei ausgeschaltetem Motor dient die Zusatzpumpe. Deren Ansaugstutzen ist mit dem Kühlerausgang und deren Förderstutzen ist kühlmittelzuführend mit dem Turbolader verbunden. Auf diese Weise wird der Turbolader mit Kühlmittel beaufschlagt und gekühlt.

Dadurch, dass die Zusatzpumpe Kühlmittel vom Kühlerausgang ansaugt und Kühlmittel in den Kühlereingang hineindrückt, wird der Turbolader besonders stark gekühlt. Eine schwächere Kühlung ergäbe sich beispielsweise, wenn wie bei der DE 10 2006 044 680 A1 der Kühlereingang mit dem Turbolader verbunden wäre. Als Folge kommt es bei der vorgeschlagenen Lösung nicht mehr zu einem Überschreiten des Dampfdrucks im Kühlmittel und somit nicht zu einer Dampfblasenbildung, die den Innendruck im Ausgleichsbehälter ansteigen lassen könnte. Dies verhindert, dass der Öffnungsdruck des als Verschluss des Ausgleichsbehälters dienenden Renkdeckels nicht mehr erreicht und ein Kühlmittelverlust vermieden wird.

Durch die Zusatzpumpe wird bei abgeschaltetem Motor bei nicht funktionierender Konvektionskühlung, beispielsweise bedingt durch eine zu hohe Anordnung des Turboladers im Kühlkreislauf, eine Kühlung des Turboladers erstmals ermöglicht. In anderen Fällen wird die Kühlwirkung einer funktionierenden Konvektionskühlung verstärkt. In beiden Konstellationen wird eine thermische Überlastung des Turboladers vermieden und seine Lebensdauer verlängert. Weiterhin werden die Nachwärmeabfuhr des Motors und/oder die Heizleistung der Innenraumheizung im Motorleerlauf verbessert, da die Konvektionskühlung auch diese Komponenten erfasst.

In einer zweiten Ausführungsform ist der Förderstutzen direkt mit dem Turbolader verbunden. Dadurch befinden sich keine zu kühlenden Komponenten zwischen Zusatzpumpe und Turbolader, ist die Kühlwirkung beim Turbolader besonders groß und steigt der Innendruck im Ausgleichsbehälter nur maßvoll an.

In einer dritten Ausführungsform ist als Zusatzpumpe eine elektrische Zusatzpumpe bzw. eine Elektropumpe vorgesehen. Die Elektropumpe wird, wie vorstehend angegeben, nach dem Ausschalten des Motors aktiviert.

Bei einer weiteren Ausführungsform ist an den Förderstutzen der Zusatzpumpe ein Schlauch angeschlossen, der in eine Verzweigung mündet, wobei die Verzweigung kühlmittelzuführend mit dem Kühlereingang und dem Turbolader verbunden ist. Hierdurch wird erreicht, dass stets ein gewisser Teil des von der Zusatzpumpe geförderten Volumenstroms durch den Wasserkühler strömt und dort gekühlt wird, was die mittlere Kühlflüssigkeitstemperatur abgesenkt. Hierdurch werden die Abwärme des Turboladers und die der Zylinderbank besonders effizient an die Umgebungsluft abgeführt. Gleichzeitig reduzieren sich die Nachlaufzeiten der Zusatzpumpe und die des dem Kühler zugeordneten Gebläses, was wiederum die Batterie des zugeordneten Kraftfahrzeugs entlastet. Weiterhin werden durch Dampfblasen bedingte Überdrücke im Kühlsystem besonders effizient vermieden.

Ein zweiter Aspekt der Erfindung betrifft ein Kraftfahrzeug, insbesondere einen Pkw, mit einem Verbrennungsmotor nach einem der obigen Ausführungsformen.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: eine Ausführungsform des Verbrennungsmotors, dargestellt bei ausgeschaltetem Motor und verschlossener Bypassleitung,
- Fig. 2: eine Ausführungsform des Verbrennungsmotors, dargestellt bei ausgeschaltetem Motor und geöffneter Bypassleitung,
- Fig. 3: Messkurven des Innendrucks im Ausgleichsbehälter.

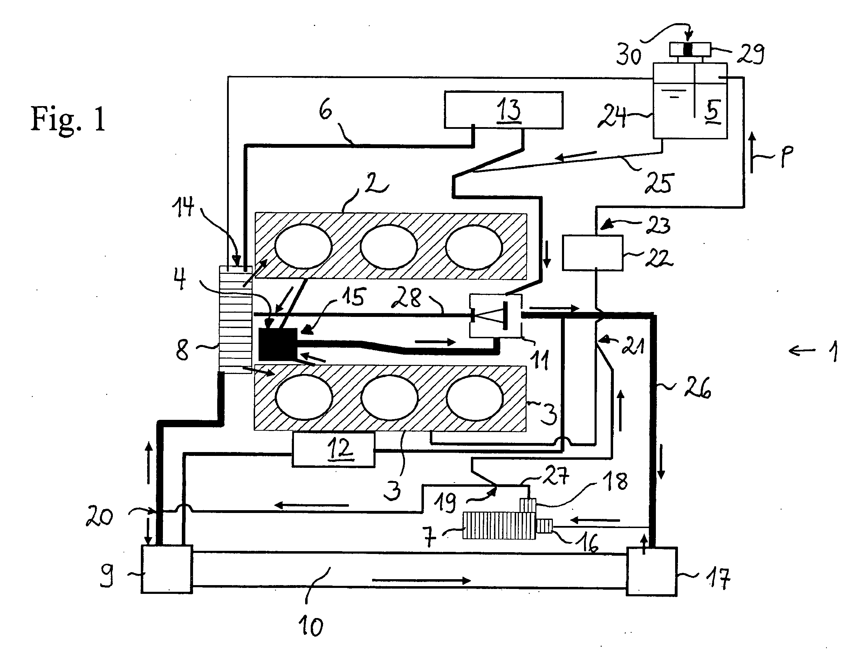

Bei den Figuren, die allgemein mit gleichen Bezugszeichen gleiche Gegenstände bezeichnen, zeigt Figur 1 eine Ausführungsform eines Verbrennungsmotors 1 im ausgeschalteten Zustand. Man erkennt zentral zwei Zylinderblöcke 2 und 3, zwischen denen sich eine Pumpe 4 zum Umwälzen einer Kühlflüssigkeit 5 befindet, damit es durch (Schlauch-)Verbindungen 6 strömt.

In Figur 1, ebenso wie in den nachfolgenden Figuren, sind die verschiedenen Verbindungen 6 als durchgezogene, die jeweiligen Motorkomponenten verbindende schwarze Linien dargestellt. Die eingezeichneten Pfeile P zeigen jeweils die Strömungsrichtung der Kühlflüssigkeit bei stehendem Motor an, wie sie sich durch die Zusatzpumpe 7 einstellt. Bei laufendem Motor können die Strömungsrichtungen anders sein.

Zur Kühlung der Zylinderblöcke 2 und 3 gibt es einen Kühlkreislauf. Bei laufendem Motor pumpt die Pumpe 4 Kühlflüssigkeit in die obere Zylinderbank 2 und die untere Zylinderbank 3. Sie gelangt dann über die Überbrückung (englisch: x-over) 8 zum Wasserkasten 9 und dann zum Kühler 10, um von dort über das Thermostat 11 zurück zur Pumpe 4 zu strömen. Ein Teil des Kühlflüssigkeitsstroms wird dabei in den Ölkühler 12 abgezweigt, der aber für die nachfolgenden Erläuterungen keine Rolle spielt.

Weiterhin gibt es eine Heizung 13, die bei laufendem Motor von Kühlflüssigkeit 5 durchströmt wird. Hierzu wird ein Teil der aus der oberen Zylinderbank 2 austretenden Kühlflüssigkeit 5 knapp hinter dem Zylinderbankrücklauf 14 abgezweigt, gelangt von dort zur Heizung 13, zum Thermostat 11 und von dort zum Zylinderbankvorlauf 15. Da die Pumpe 4 in der Regel mechanisch angetrieben wird, stoppt sie beim Abstellen des Verbrennungsmotors 1, wodurch der Kühlkreislauf zum Erliegen kommt.

Beim Abstellen des Motors 1 wird die elektrische Zusatzpumpe 7 von der Bordelektronik eingeschaltet. Sie saugt über ihren Ansaugstutzen 16 vom Wasserkasten bzw. Kühlerausgang 17 Kühlmittel 5 an und fördert es zunächst über ihren Förderstutzen 18 über eine Schlauchverbindung 27 zur Verzweigung 19. Ein Teil des Fördervolumens gelangt dann über die Verzweigung 20 zum Kühler 10, um dort gekühlt zu werden. Ein zweiter Teil des von der Zusatzpumpe 7 geförderten Volumenstroms, z. B. 50 %, gelangt über die Verzweigung 21 zum Turbolader 22. Dessen Ablauf 23 ist mit dem Ausgleichsbehälter 24 verbunden, von wo aus Kühlmittel 5 über die Schlauchverbindung 25 zum Thermostat 11 fließt. Von dort aus fließt sie über die Schlauchverbindung 26 zurück zur Zusatzpumpe 7.

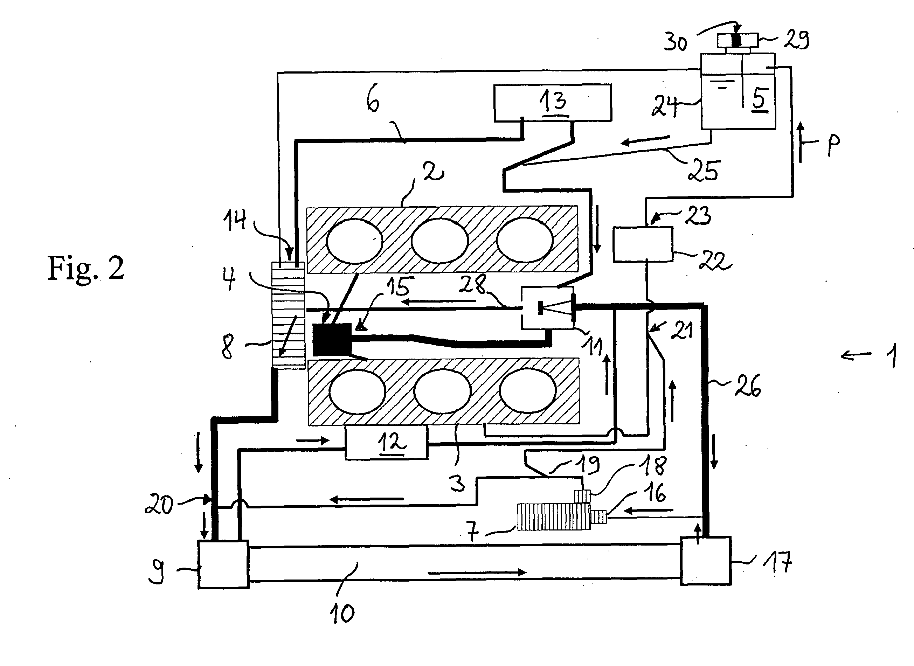

Das im letzten Absatz beschriebene Fließen des Kühlmittels 5 stellt sich bei hinreichend hohen Kühlmitteltemperaturen ein, wenn die Bypass-Leitung 28 vom Thermostat 11 verschlossen ist. Bei hinreichend niedrigen Temperaturen des Kühlmittels 5, z. B. unter 82 °C, ist die Bypass-Leitung 28 offen. Dies zeigt Figur 2. Vom Turbolader 22 zurückströmendes Kühlmittel 5 gelangt dann über die Schlauchverbindung 25 und das Thermostat 11 und die Bypass-Leitung 28, die Überbrückung 8 zum Wasserkasten 9 und wird dann im Kühler 10 gekühlt.

Wie ersichtlich wird der Turbolader 22 von der Zusatzpumpe 7 direkt mit Kühlmittel 5 beaufschlagt. Dies führt in Kombination mit dem Kühlen eines Volumenteilstroms im Kühler 10 zu einer effizienten Kühlen des Turboladers 22. Dies führt zu einer reduzierten Kühlmitteltemperatur in der Nachhitzephase nach dem Ausschalten des Motors. Dies erhöht einerseits die Lebensdauer des Turboladers 22 durch Vermeidung einer kritischen Überhitzung und verhindert gleichzeitig eine frühzeitige Ölalterung im Turbolader 22. Weiterhin bedingt die reduzierte Kühlmitteltemperatur einen geringeren Innendruck im Ausgleichsbehälter 24. Der Renkdeckel 29 enthält typischerweise ein Überdruckventil 30, das deshalb nicht so leicht ungewollt öffnet.

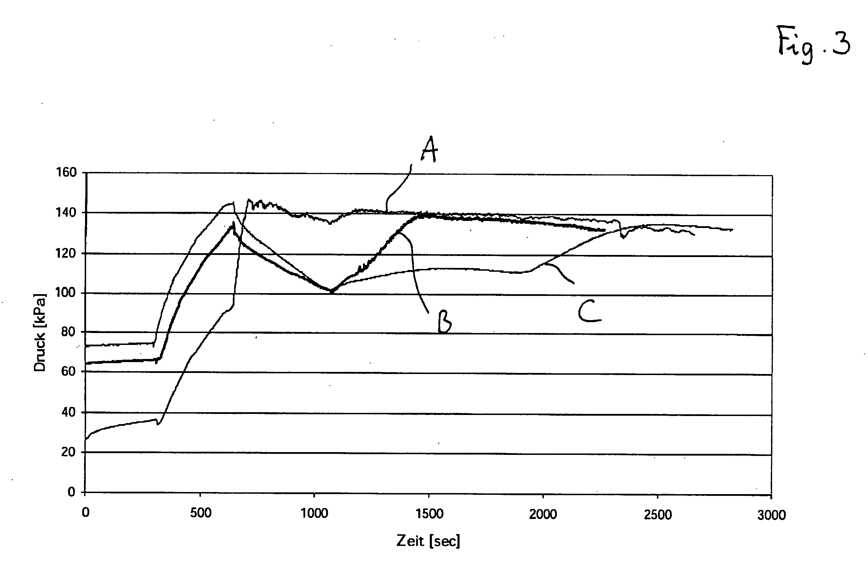

Figur 3 zeigt Messkurven des Innendrucks im Ausgleichsbehälter bei einem Pkw mit Turbolader nach dem Abstellen des Fahrzeugs. Abgetragen ist der Gasdruck im Ausgleichsbehälter 24 als Funktion der Zeit. Bei allen drei Messkurven wurde zunächst eine Konditionierung zwischen 0 Sekunden und etwa 300 Sekunden vorgenommen. Nach diesem in etwa waagrechten Verlauf der Messkurven wurde der Motor eingeschaltet und stieg der Druck im Ausgleichsbehälter bis zum Erreichen des Betriebspunkts bei circa 600 Sekunden an. Danach wurde der Motor ausgeschaltet. Die Kurve A zeigt zunächst den Druck ohne Einschalten der Zusatzpumpe 7. Man erkennt, das der Öffnungsdruck des Überdruckventils 30 im Renkdeckel 29, nämlich 1.4 +/. 0.1 bar, überschritten wird und dort länger verbleibt. Es kommt dadurch zu einem Öffnen des Überdruckventils 30 auch bei moderaten Belastungen des Motors in der Nachhitzephase. Bei Kurve B lief die Zusatzpumpe 7 Minuten. In diesem Falle waren die Druckwerte stets unterhalb 1.4 bar. Bei Kurve C lief die Zusatzpumpe 20 Minuten. Abgesehen von einer kurzen Druckspitze bei ca. 600 sec bleibt der Druck signifikant unterhalb des Öffnungsdrucks.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Verbrennungsmotor
- 02: Zylinderbank
- 03: Zylinderbank
- 04: Pumpe
- 05: Kühlflüssigkeit
- 06: (Schlauch-) Verbindung
- 07: Zusatzpumpe
- 08: Überbrückung
- 09: Wasserkasten
- 10: Kühler
- 11: Thermostat
- 12: Ölkühler
- 13: Heizung
- 14: Zylinderbankrücklauf
- 15: Zylinderbankvorlauf
- 16: Ansaugstutzen
- 17: Kühlerausgang
- 18: Förderstutzen
- 19: Verzweigung
- 20: Verzweigung
- 21: Verzweigung
- 22: Turbolader
- 23: Ablauf
- 24: Ausgleichsbehälter
- 25: Schlauchverbindung
- 26: Schlauchverbindung
- 27: Schlauchverbindung
- 28: Bypass-Leitung
- 29: Renkdeckel
- 30: Überdruckventil

## Patentansprüche

1. Verbrennungsmotor, umfassend
a) eine Zylinderbank (2,3) sowie ein Kühler (10), als Bestandteile eines von einer Pumpe (4) angetriebenen Kühlkreislaufs,
b) einen an den Kühlkreislauf angeschlossenen Turbolader (22), dessen Ablauf (23) mit einem Ausgleichsbehälter (24) verbunden ist,
c) eine Zusatzpumpe (7), deren Ansaugstutzen (16) mit dem Kühlerausgang (17) und deren Förderstutzen (18) kühlmittelzuführend mit dem Turbolader verbunden ist.

2. Verbrennungsmotor nach Anspruch 1, bei dem der Förderstutzen direkt mit dem Turbolader verbunden ist.

3. Verbrennungsmotor nach einem der vorherigen Ansprüche, bei dem eine elektrische Zusatzpumpe vorgesehen ist.

4. Verbrennungsmotor nach einem der vorherigen Ansprüche, mit einer an den Förderstutzen der Zusatzpumpe angeschlossenen Schlauchverbindung (27), der in eine Verzweigung (19) mündet, wobei die Verzweigung kühlmittelzuführend mit dem Kühlereingang (9) und dem Turbolader verbunden ist.

5. Kraftfahrzeug, insbesondere Pkw, mit einem Verbrennungsmotor nach einem der vorherigen Ansprüche.
